(19) Europäisches Patentamt

European Patent Office

Office européen des brevets

(11) **EP 0 930 557 A2**

(12) **EUROPÄISCHE PATENTANMELDUNG**

(43) Veröffentlichungstag:
21.07.1999 Patentblatt 1999/29

(51) Int. Cl.⁶: **G06F 1/04**

(21) Anmeldenummer: 98120270.8

(22) Anmeldetag: 27.10.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 21.01.1998 DE 19802065

(71) Anmelder:
**Mannesmann VDO Aktiengesellschaft**
**60388 Frankfurt am Main (DE)**

(72) Erfinder: **Sattler, Frank, Dr.**
**64832 Babenhausen (DE)**

(74) Vertreter:
**Klein, Thomas, Dipl.-Ing.**
**Kruppstrasse 105**
**60388 Frankfurt (DE)**

(54) **Taktmodulator zum Ansteuern von Mikroprozessoren und/oder anderen digitalen Schaltkreisen**

(57)    Bei einem Taktmodulator zur Modulation eines Grundtaktsignals zu einem Systemtakt für ein Digitalsystem, welches mindestens einen Mikroprozessor und/oder sonstigen digitalen Baustein enthält, wobei der Systemtakt in dem Digitalsystem ein Störspektrum mit Störspitzen erzeugt, ist vorgesehen, daß der Takt-modulator (11) in Abhängigkeit des Störspektrums des Systemtaktes (4) in dem Digitalsystem (5) derart anpaßbar ist, daß die Amplituden der Störspitzen reduziert werden.

Fig. 1

## Beschreibung

Die Erfindung betrifft einen Taktmodulator zur Modulation eines Grundtaktsignals zu einem Systemtakt, wobei der Systemtakt Mikroprozessoren und/oder andere digitale Schaltkreise ansteuert und dabei ein Störspektrum mit Störspitzen erzeugt.

In Taktgeneratoren von Mikroprozessoren und/oder anderen digitalen Schaltkreisen dienen Quarze in Oszillatoren zur Erzeugung einer stabilen Taktfrequenz. Eine derartige Schaltung erzeugt Störungen, die durch sehr schmale Spitzen gekennzeichnet sind. Die Störenergie ist damit auf wenige Frequenzen konzentriert, wobei diese Spitzen hohe Pegel erreichen. Aus Gründen der elektromagnetischen Verträglichkeit (EMV) ist dies jedoch unerwünscht. Aus dem Stand der Technik ist es bekannt, durch den Einsatz von Taktmodulatoren, die die Taktzeitpunkte auf vorgegebene und definierte Weise verändern, die Störenergie auf sehr viele Spektrallinien mit entsprechend geringerem Pegel zu verteilen. Dabei erzeugt ein Oszillator einen frequenz- und phasenstabilen Grundtakt, der in einem Taktmodulator zu einem Systemtakt derart verändert wird, daß die Flanken keinen zeitlich konstanten Abstand mehr besitzen. Die Implementierung bekannter Taktmodulatoren in digitalen Schaltungen beschränkt sich darauf, den Taktmodulator in der Entwurfsphase zu dimensionieren. Später kann er bestenfalls ein- und ausgeschaltet werden. Das Störspektrum des isolierten Systemtakts kann sich aber von dem Störspektrum unterscheiden, welches der Systemtakt in dem Digitalsystem hervorruft, welches er ansteuert. Nachteilig hierbei ist, daß nicht vorhersehbar ist, welches Störspektrum der Systemtakt im gesamten Digitalsystem hervorruft und ob durch dieses Störspektrum die maximal tolerierbaren Störwerte nicht überschritten werden.

Aufgabe der Erfindung ist es daher, einen Taktmodulator anzugeben, mit dem die erlaubten maximalen Störwerte durch einen Systemtakt in einem Digitalsystem nicht überschritten werden.

Diese Aufgabe wird erfindungsgemäß dadurch gelöst, daß der Modulator in Abhängigkeit des Störspektrums des Systemtakts in dem Digitalsystem derart anpaßbar ist, daß die Amplituden der Störungsspitzen des Störspektrums reduziert werden und so die maximal tolerierbaren Störwerte nicht überschreiten. Hierdurch ist es vorteilhaft, daß der Einfluß schaltungstechnischer Resonanzen, die z.B. durch die einzelnen Bauteile der Schaltung, das Schaltungslayout und/oder die Umgebung der Schaltung hervorgerufen werden können, verringert werden können. Weiterhin ist bei Schaltungsänderungen wie z.B. dem Einsatz anderer Bauteile oder Layoutänderungen eine Anpassung des Modulators möglich.

Durch eine Veränderung der Schaltimpulsabstände, insbesondere durch Veränderung der möglichen Lage der einzelnen Schaltimpulse, können die Spitzen des Störspektrums zu Frequenzen verschoben werden, wo sie weniger stören. So können z.B. die Störspitzen zu Frequenzen verschoben werden, bei denen zuvor Nullstellen lagen und so die Höhe der Störspitzen reduziert werden.

Durch einen Zufallszahlengenerator, der mehrere Zufallszahlenfolgen erzeugen kann, kann auf eine einfache Art und Weise durch einfaches Umschalten und Testen der verschiedenen Zufallsfolgen diejenige Einstellung gefunden werden, die die zulässigen Störpegel nicht überschreitet.

Durch in Reihe geschaltete Verzögerungsglieder, wobei vor und hinter den Verzögerungsgliedern Abgriffe zum Abgreifen des Systemtakts angeordnet sind, lassen sich die Abstände der jeweils benachbarten Schaltimpulse durch Umschalten auf einen anderen Abgriff verändern. Durch eine Verstellung der Verzögerungszeiten der Verzögerungsglieder kann auf einfache Weise der Abstand der möglichen Lage der einzelnen Schaltimpulse des Systemtaktes variiert werden.

Durch Zu- bzw. Wegschalten einer Anzahl von Verzögerungsgliedern in Abhängigkeit des durch den Zufallszahlengenerator erzeugten Zahl wird insbesondere mit zyklisch wiederkehrenden Zahlen ein reproduzierbares Störspektrum erzeugt.

Die Erfindung wird nachfolgend anhand der Figuren näher erläutert. Es zeigen:

Figur 1    einen Oszillator mit nachgeschaltetem Modulator und Digitalsystem,

Figur 2    das Störspektrum eines modulierten Signals,

Figur 3    das Störspektrum des modulierten Signals aus Figur 1, das sich in einem Digitalsystem ergibt, und eine geforderte Grenzwertlinie,

Figur 4    das Störspektrum des modulierten Signals aus Figur 3 nach dessen Anpassung an das Digitalsystem,

Figur 5    schematisch die mögliche Lage der einzelnen Umschaltimpulse,

Figur 6    die Lage der Umschaltimpulse für eine bestimmte Zufallsfolge,

Figur 7    das Störspektrum für einen Systemtakt mit verschiedenen Impulszeitabständen,

Figur 8    einen Trapezimpuls,

Figur 9    das Störspektrum eines Modulators, der nicht an die Impulsform z.B. eines Ausgangssignals angepaßt ist,

Figur 10　　das Störspektrum eines Modulators, der an die Impulsform z.B. eines Ausgangssignals angepaßt ist,

Figur 11　　eine mögliche Schaltung eines anpaßbaren Taktmodulators.

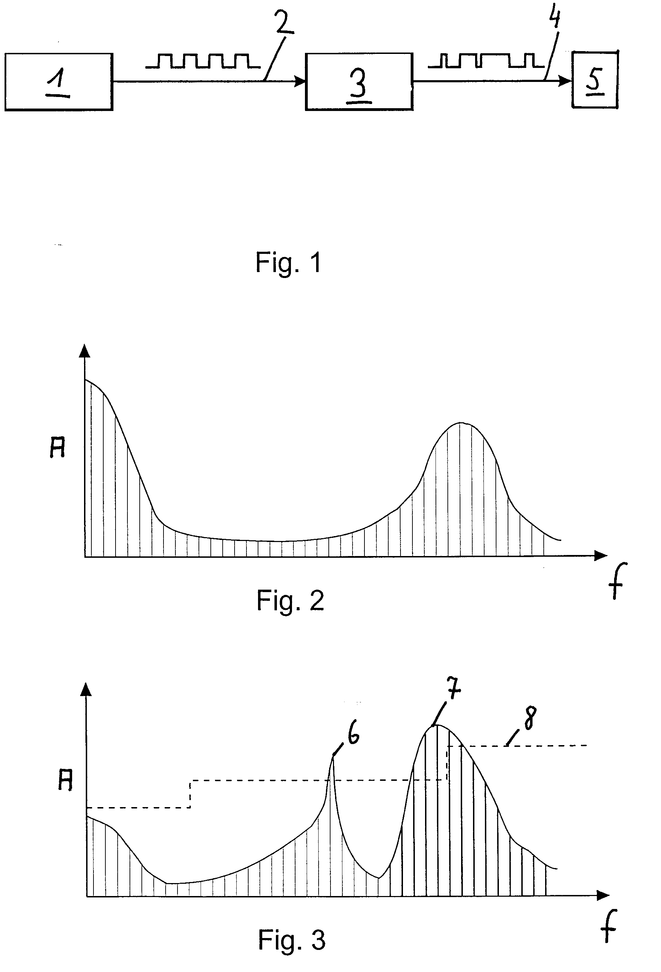

In Figur 1 wird im Oszillator 1 ein Grundtakt 2 erzeugt, der im Taktmodulator 3 zum Systemtakt 4 moduliert wird, mit dem das Digitalsystem 5, bestehend aus einem nicht dargestellten Mikroprozessor und/oder sonstigen Digitalbausteinen, angesteuert wird.

Das Störspektrum eines Systemtaktes ist in Figur 2 dargestellt. Das Störspektrum, das durch den Systemtakt 4 in dem Digitalsystem 5 verursacht wird, kann man aus Figur 3 ersehen. Durch z.B. Resonanzen werden Störspitzen 6, 7 erzeugt, die oberhalb einer Grenzwertlinie 8 liegen und wegen ihrer Amplitudengröße zu Störungen führen und deshalb unerwünscht sind.

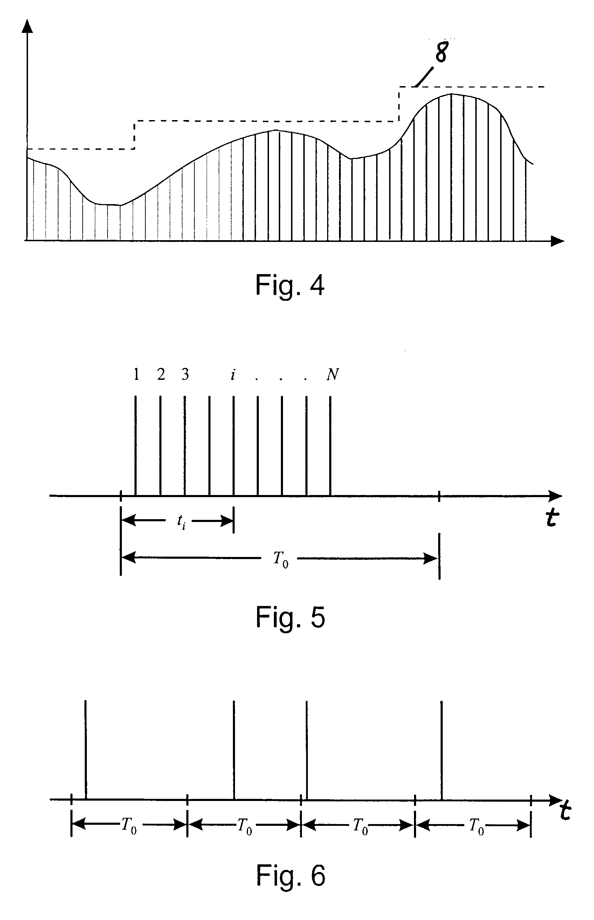

Für das Störspektrum in Figur 4 ist der Taktmodulator derart anpaßbar, daß sich die Maximalamplituden sämtlicher auftretender Frequenzen unterhalb der Grenzwertlinie 8 befinden.

Zur Beschreibung der Parametereinflüsse am Beispiel eines diskreten Phasenmodulators als Taktmodulator dient ein idealisiertes Modell. Die Umschaltimpulse werden durch unendlich kurze und unendlich hohe Impulse (Dirac-Impulse) repräsentiert. Gemittelt über alle möglichen Zeitfunktionen (Musterfunktionen) einer vorgegebenen Wahrscheinlichkeitsverteilung ergibt sich für die Spektralfunktion (Leistungsdichte):

$$H(f) = \sum_{i=1}^{N} p_i \cdot e^{-j2\pi f t_i}. \qquad (1)$$

Die $t_i$ stellen die Zeitpunkte der Umschaltimpulse dar, $p_i$ die Wahrscheinlichkeiten. $N$ ist die Anzahl der möglichen Zeitpunkte innerhalb der Grundperiode $T_0$. Fig.5 stellt schematisch das "mittlere" Signal dar d.h. die Lage der Umschaltimpulse innerhalb einer Grundperiode.

Der Frequenzverlauf einer konkreten Mustertunktion hängt natürlich von den tatsächlich gewählten $t_i$ innerhalb einer Zufallsfolge von endlicher oder unendlicher Periodendauer ab, da Gl. (1) nur das "mittlere" Spektrum repräsentiert. Die Umschaltimpulse einer Musterfunktion zeigt beispielhaft Fig.6.

An einzelnen Frequenzen wird sich deshalb in der Regel der Pegel des Spektrums einer Mustertunktion von $H(f)$ unterscheiden. $t_i$ und $N$ sowie die Auswahl der Zufallsfolge, wodurch die $p_i$ bestimmt sind, stellen die Parameter zur Beeinflussung der Wirkungsweise eines Phasenmodulators dar.

In der Realität liegen Impulse mit bestimmter Signalform vor. Unter der Annahme, daß alle Impulse die gleiche Form besitzen, folgt für das reale Spektrum

$$P(f) = G(f) \cdot H(f), \qquad (2)$$

wobei $G(f)$ die Spektralfunktion eines Einzelimpulses ist. Wiederholt sich die Signalform nur für eine Gruppe von Impulsen (z.B. bei bipolaren Impulsen), dann repräsentiert $G(f)$ die Spektralfunktion dieser Gruppe.

Bei äquidistanter Wahl der Impulszeitpunkte (konstante zeitliche Abstände der möglichen $t_i$) gibt es Frequenzen bzw. Frequenzbänder bei denen keine Reduzierung der Spektrallinien gegenüber dem unmodulierten Fall erzielt wird. Für die tiefste dieser Frequenzen gilt der Zusammenhang:

$$f_n = \frac{N-1}{mT_0}. \qquad (3)$$

$m$ ist der Modulationsgrad und $T_0$ die Grundperiode. Die maximale Reduzierung des Störpegels ergibt sich in den Bereichen zwischen diesen Frequenzen. Näherungsweise hängt dieser Gewinn nur von $N$ ab:

$$G = 20 \lg N. \qquad (4)$$

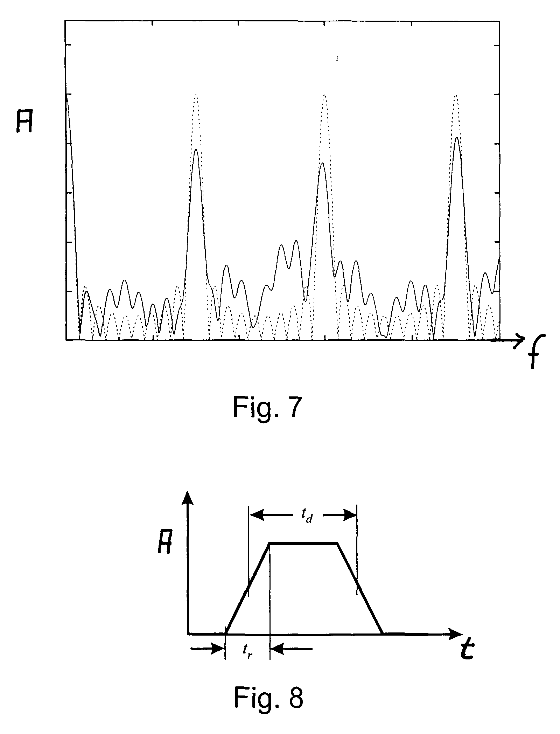

In Figur 7 zeigt Kurve 9 einen Teil eines Störspektrums für einen Takt mit gleichlangen (äquidistanten) Impulszeitabständen und Kurve 10 für einen Takt mit ungleichen Impulszeitabständen. Man kann erkennen, daß bei Impulsen mit ungleichen Impulszeitabständen die absolute Höhe der Störspitzen bei den Resonanzfrequenzen niedriger ist als bei solchen mit gleichen Impulszeitabständen.

Figur 8 zeigt einen trapezförmigen Impuls. Durch die mittlere Dauer $t_d$ dieser Impulse ergeben sich Nullstellen im Frequenzbereich

$$f_{Null} = k \cdot \frac{1}{t_d}, \quad k = 1,2,3,... \qquad (5).$$

Weitere Nullstellen ergeben sich durch die Anstiegszeit $t_r$:

$$f_{Null2} = k \cdot \frac{1}{t_r}, \quad k = 1,2,3,... \qquad (6).$$

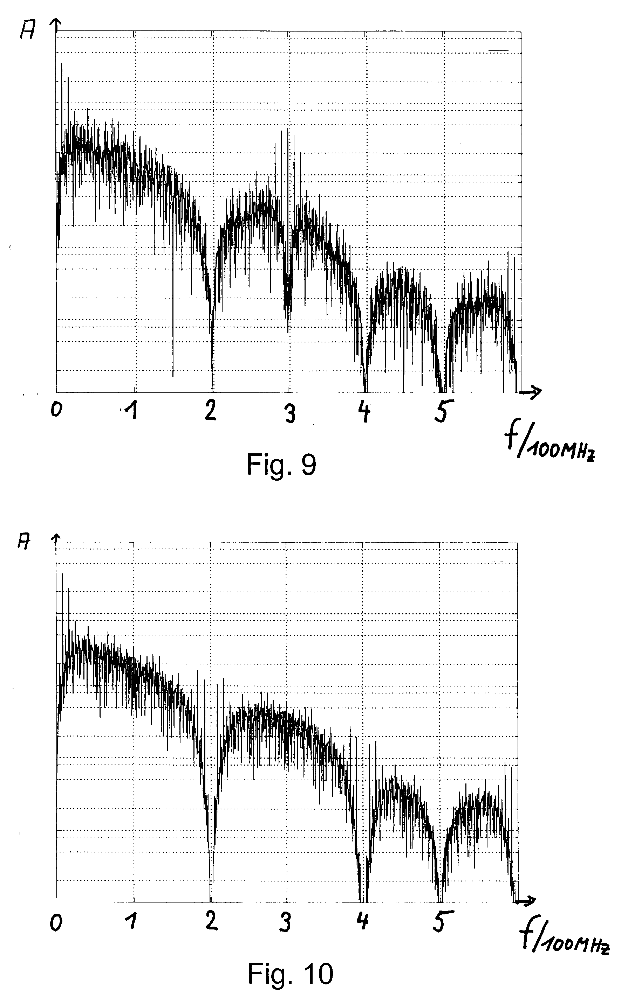

Figur 9 zeigt das Störspektrum einer konkreten Musterfunktion mit den Nullstellen $f_0 = 200$ bzw. 400 MHz. Man erkennt bei 300 MHz deutliche Störspitzen.

Figur 10 zeigt das Störspektrum der konkreten Musterfunktion von Figur 9, bei der $f_n$ derart verändert wurde, daß es auf den Nullstellen $f_{Null}$ liegt. Dadurch sind die Störspitzen bei 300 MHz deutlich reduziert.

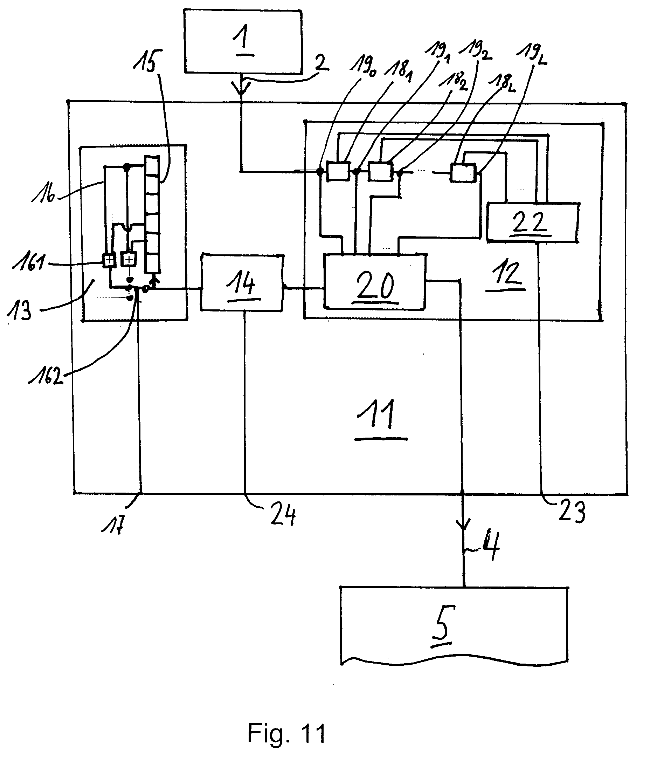

Figur 11 zeigt eine mögliche Schaltung eines erfindungsgemäßen Taktmodulators im Zusammenspiel mit einem Oszillator und einem Digitalsystem. Der Oszillator 1 erzeugt einen Grundtakt 2, der im anpaßbaren Taktmodulator 11 moduliert wird und als Systemtakt 4 das Digitalsystem 5 ansteuert. Der Taktmodulator 11 weist eine Vorrichtung 12 zur Verzögerung des Grundtaktsignals, einen Zufallszahlengenerator 13 und einen Codewandler 14 auf. Der Zufallszahlengenerator 13 weist ein Schieberegister 15 mit wählbaren Rückkopplungsnetzwerken auf. In dem Schieberegister 15 ist eine Zahlenfolge abgespeichert. Das Schieberegister 15 weist Anzapfungen 16 auf, die die Inhalte der angezapften Speicher des Schieberegisters 15 zu Addierern 161 leiten. Die Addierer 161 sind über eine Schaltvorrichtung 162 auswählbar, die über eine Steuerleitung 17 betätigbar ist. Je nach der durch Schaltvorrichtung 162 angewählten Anzapfung 16 werden die in dem jeweiligen Speicher des Schieberegister 15 enthaltenen Zahlen zyklisch ausgelesen, im ausgewählten Addierer 161 addiert und dann gleichzeitig an den Codewandler 14 und den Anfang des Schieberegisters 15 geleitet.

Die Vorrichtung 12 zur Verzögerung des Grundtaktsignals weist in Reihe geschaltete Verzögerungsglieder $18_1$ bis $18_L$ auf, wobei am Eingang des ersten Verzögerungsgliedes $18_1$ der Grundtakt 2 anliegt. Vor und hinter den einzelnen Verzögerungsgliedern sind Anzapfungen $19_0$ bis $19_L$ angeordnet, die abwechselnd über eine Schaltvorrichtung 20 mit einer Taktleitung 21 elektrisch leitend verbindbar sind. Über die Taktleitung 21 wird der modulierte Takt 4 zu dem Digitalsystem 5 geleitet. Die Verzögerungszeiten der Verzögerungsglieder $18_1$ bis $18_L$ sind durch eine Steuereinrichtung 22 einstellbar, die über die Steuerleitung 23 steuerbar ist.

Je nach der im Zufallszahlengenerator 13 erzeugten Zufallszahl steuert der Codewandler 14 die Schaltvorrichtung 20 auf eine andere Anzapfung 19, so daß die Verzögerung des Grundtaktes wegen der Veränderung der Anzahl der wirksamen Verzögerungsglieder 18 verändert wird und so der Zeitpunkt der einzelnen Schaltimpulse variiert wird.

Der vorbeschriebene Taktmodulator 11 ist an das Digitalsystem 5 anpaßbar durch die Auswahl der Anzapfungen 16 mit den entsprechend damit erzeugten Zufallszahlen im Zufallszahlengenerator 13, durch die Einstellung der Verzögerungszeiten der Verzögerungsglieder 18 in der Steuereinrichtung 22 über eine Steuerleitung 23 und/oder durch eine Änderung der Zuordnungsvorschriften in der Umschaltvorrichtung 14 über eine Steuerleitung 24. Hierdurch ist insgesamt eine wirksame Reduzierung des Störspektrums in einer konkreten Applikation erreichbar.

**Patentansprüche**

1. Taktmodulator zur Modulation eines Grundtaktsignals zu einem Systemtakt für ein Digitalsystem, welches mindestens einen Mikroprozessor und/oder sonstigen digitalen Baustein enthält, wobei der Systemtakt in dem Digitalsystem ein Störspektrum mit Störspitzen erzeugt, dadurch gekennzeichnet, daß der Taktmodulator (11) in Abhängigkeit des Störspektrums des Systemtaktes (4) in dem Digitalsystem (5) derart anpaßbar ist, daß die Amplituden der Störspitzen reduziert werden.

2. Taktmodulator nach Anspruch 1, dadurch gekennzeichnet, daß die Anpassung durch Veränderung der möglichen Lage der einzelnen Schaltimpulse und/oder durch Veränderung der Anzahl der möglichen Verzögerungszeiten durchführbar ist.

3. Taktmodulator nach Anspruch 1 oder 2, dadurch gekennzeichnet, daß er einen Zufallszahlengenerator (13) aufweist, durch dessen Ausgangssignal die Lage der Ausgangsimpulse direkt oder indirekt bestimmbar ist.

4. Taktmodulator nach Anspruch 3, dadurch gekennzeichnet, daß durch den Zufallszahlengenerator (13) mehrere verschiedene Zahlenfolgen erzeugbar sind, die einzeln auswählbar sind.

5. Taktmodulator nach einem der vorstehenden Ansprüche, dadurch gekennzeichnet, daß eine Vorrichtung (12) zur Verzögerung des Grundtaktsignals vorhanden ist.

6. Taktmodulator nach Anspruch 4 oder 5, dadurch gekennzeichnet, daß die Vorrichtung (12) zur Verzögerung des Grundtaktsignals Verzögerungsglieder ($18_1$ bis $18_L$) aufweist.

7. Taktmodulator nach Anspruch 6, dadurch gekennzeichnet, daß die Verzögerungsglieder ($18_1$ bis $18_L$) in Reihe geschaltet sind und vor und hinter den Verzögerungsgliedern ($18_1$ bis $18_L$) Abgriffe ($19_0$ bis $19_L$) zum Abgreifen des Systemtakts (4) angeordnet sind.

8. Taktmodulator nach Anspruch 6 oder 7, dadurch gekennzeichnet, daß die Verzögerungszeiten der Verzögerungsglieder ($18_1$ bis $18_L$) verstellbar sind.

9. Taktmodulator nach einem der Ansprüche 3 bis 8, dadurch gekennzeichnet, daß ein Codewandler (14) vorhanden ist, der in Abhängigkeit der durch den Zufallszahlengenerator (13) erzeugten Zahl eine Anzahl von Verzögerungsgliedern ($18_1$ bis $18_L$) zu- bzw. wegschaltet.

10. Taktmodulator nach Anspruch 9, dadurch gekennzeichnet, daß die Kriterien des Codewandlers (14) zur Zuordnung einer Zufallszahl zu einer Anzahl von Verzögerungsgliedern ($18_1$ bis $18_L$) veränderbar sind.

Fig. 1

Fig. 2

Fig. 3

Fig. 4

Fig. 5

Fig. 6

Fig. 7

Fig. 8

Fig. 9

Fig. 10

Fig. 11